# EUROPEAN PATENT APPLICATION

(11) **EP 2 045 730 A1**
(43) Date of publication of application: **08.04.2009**
(21) Application number: 08165657.1
(22) Date of filing: 01.10.2008
(51) Int. Cl.: G06F 17/30

(54) **Methods and apparatuses for an engine that pairs advertisements with video files**

(30) Priority: 30.09.2008 US 241763; 02.10.2007 US 977033 P
(71) Applicant: BlinkX UK Ltd, Cambridge, Cambridgeshire CB4 0WX (GB)
(72) Inventor: Chandratillake, Suranga, San Francisco, 94109 (US); Scheybeler, Matt, Cambridge, cambridgeshire CB4 1JN (GB); Beadle, Andrew James, Cambridge, Cambridgeshire CB24 6BE (GB); Stockdale, Jack, Cambridge, Cambridgeshire CB1 5EY (GB)
(74) Representative: Hutchinson, Glenn Stanley

(57) **Abstract**

A system to pair advertisements with media files is described. A request is processed to find one or more relevant advertisements and determine when to display each relevant advertisement at a temporally contextual point within a video file when the video file is played on a web page. Identifying information regarding the video file about to be played on the video player is received across a network from either a web page or a video player embedded on the web page and the request to find the one or more relevant advertisements. Upon receiving the request, a look up in an existing index for video entities occurs on whether the video file's key concepts and timing information are already known. The video file's key concepts and timing information are retrieved from a database. A request is generated for advertisements that contextually match the content in the key conceptual points found in the content of the video file. The timing information is retrieved regarding when the key conceptual points, relevant to returned advertisements that contextually match, chronologically appear in the video file. Contextual relevant advertisements are supplied with temporal information on when the placement of advertisements is most contextually relevant to the content being played in the video file.

## Description

### RELATED APPLICATIONS

This application claims priority to United States Provisional Patent Application number 60/977033, entitled VARIOUS METHODS AND APPARATUSES FOR PAIRING ADVERTISEMENTS WITH VIDEO FILES, inventor Chandratillake, et al, filed Oct. 2, 2007; and United States Provisional Patent Application number 12/241,763, entitled Various Methods and Apparatuses for an Engine that Pairs Advertisements with Video Files, inventor Chandratillake et al, filed September 30^{th}, 2008.

### NOTICE OF COPYRIGHT

A portion of the disclosure of this patent document contains material that is subject to copyright protection. The copyright owner has no objection to the facsimile reproduction by anyone of the interconnect as it appears in the Patent and Trademark Office Patent file or records, but otherwise reserves all copyright rights whatsoever.

An aspect of the invention is to contextually understand a content in a video file and make a pairing of one or more contextually relevant advertisements to the content in the video file.

### BACKGROUND

Most video players on websites posses proprietary coding to play video files coded to work with those viral video players. Also, in most systems, the video player, video file and advertisement are integrated together limiting the amount of opportunities an advertisement can be played with a video because that video player must be used to play the video and advertisement. Further, the same advertisement cannot be paired and played with other videos.

### Summary of Invention

Various embodiments are described. In an embodiment, a system to pair advertisements with media files is described. A request is processed to find one or more relevant advertisements and determine when to display each relevant advertisement at a temporally contextual point within a video file when the video file is played on a web page. Identifying information regarding the video file about to be played on the video player is received across a network from either a web page or a video player embedded on the web page and the request to find the one or more relevant advertisements. Upon receiving the request, a look-up in an existing index for video entities occurs on whether the video file's key concepts and timing information are already known. The video file's key concepts and timing information are retrieved from a database. A request is generated for advertisements that contextually match the content in the key conceptual points found in the content of the video file. The timing information is retrieved regarding when the key conceptual points, relevant to returned advertisements that contextually match, chronologically appear in the video file. Contextual relevant advertisements are supplied with temporal information when the placement of advertisements is most contextually relevant to the content being played in the video file.

### BRIEF DESCRIPTION OF THE DRAWINGS

The multiple drawings refer to the embodiments of the invention.
Figure 1 illustrates a block diagram of an engine system to pair advertisements with media files.
Figure 2a illustrates a flow diagram of an embodiment of the contextual engine processing a request to find one or more relevant advertisements and determine when to display each relevant advertisement at a temporally contextual point within a video file when the video file is played on a web page.
Figure 2b illustrates a flow diagram of an embodiment of the contextual engine processing a media file not previously analyzed.
Figure 3 illustrates a diagram of an embodiment of an on-demand dynamic spider.
Figure 4 illustrates a diagram of an embodiment of an embedded ad tag.
Figure 5 illustrates a diagram of an embodiment of the contextual engine pairing ads to video files.
Figure 6 illustrates a class diagram of an embodiment of a contextual engine.
Figure 7 illustrates a diagram of an embodiment of a system to pair advertisements with video files using an advertisement player.

While the invention is subject to various modifications and alternative forms, specific embodiments thereof have been shown by way of example in the drawings and will herein be described in detail. The invention should be understood to not be limited to the particular forms disclosed, but on the contrary, the intention is to cover all modifications, equivalents, and alternatives falling within the spirit and scope of the invention.

### DETAILED DISCUSSION

In the following description, numerous specific details are set forth, such as examples of specific protocol commands, named components, connections, internet publishing and advertising technology, etc., in order to provide a thorough understanding of the present invention. It will be apparent, however, to one skilled in the art that the present invention may be practiced without these specific details. In other instances, well-known components or methods have not been described in detail but rather in a block diagram in order to avoid unnecessarily obscuring the present invention. Thus, the specific details set forth are merely exemplary. The specific details may be varied from and still be contemplated to be within the spirit and scope of the present invention. The term "coupled" is defined as meaning connected either directly or indirectly.

An example process of and apparatus to pair advertisements with video files is described. The following drawings and text describe various example implementations of the design.

In general, a system to pair advertisements with media files is described. A request is processed to find one or more relevant advertisements and determine when to display each relevant advertisement at a temporally contextual point within a video file when the video file is played on a web page. Identifying information regarding the video file about to be played on the video player is received across a network from either a web page or a video player embedded on the web page and the request to find the one or more relevant advertisements. Upon receiving the request, a look-up in an existing index for video entities occurs on whether the video file's key concepts and timing information are already known. The video file's key concepts and timing information are retrieved from a database. A request is generated for advertisements that contextually match the content in the key conceptual points found in the content of the video file. The timing information is retrieved regarding when the key conceptual points, relevant to returned advertisements that contextually match, chronologically appear in the video file. Contextually relevant advertisements are supplied with temporal information on when the placement of advertisements is most contextually relevant to the content being played in the video file.

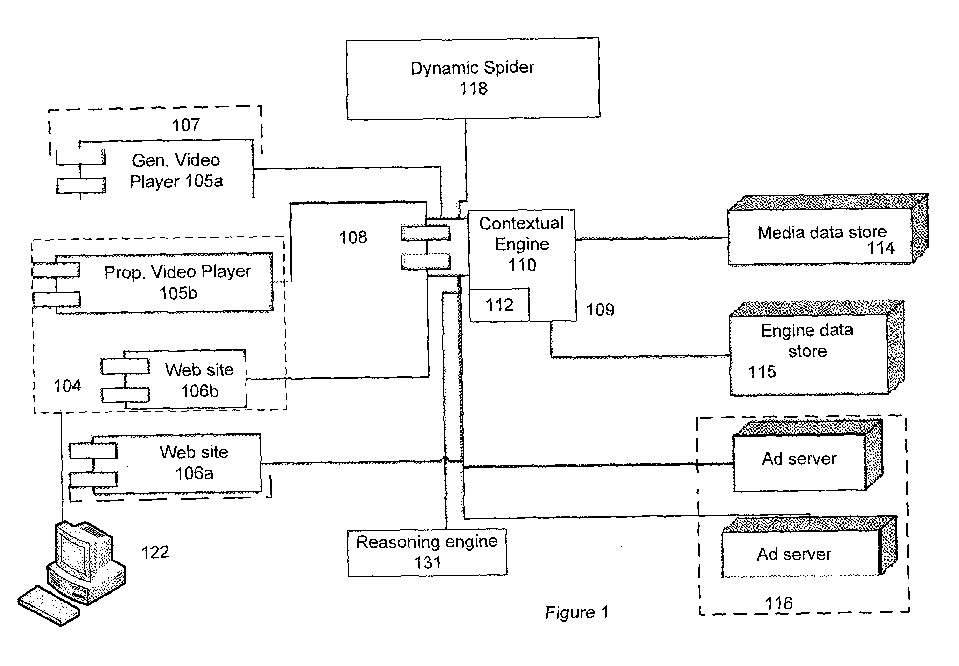

Figure 1 illustrates a block diagram of an engine system to pair advertisements with media files. A contextual engine 110 may be hosted on a first server 109. The contextual engine 110 has logic and software configured to reference data on one or more video files stored in a memory 112 of the contextual engine 110 as well as to send each video file not previously analyzed to one or more content analysis tools to determine the content within that video file and then store the video file's content characteristics in a database 114, such as a media data store. The contextual engine has a communication link to a web page 106a, 106b having a video player 105a 105b, which is hosted on another server 104, 107. The contextual engine 110 has an output module configured to communicate across the network 108 to as well as an input module configured to receive the request from both, for example, a generic video player 105a embedded on the web page 106a hosted on the second server 104 and a viral video player 105a, coded to merely play video files specifically coded to work with only that video player type, that is embedded on another web page 106a hosted on a third server 107.

At least one of the web page 106a 106b and the video player 105a, 105b is configured to make a call to and send information associated with a video file about to be played on the video player 105a, 105b across a network 108 to the contextual engine 110 for matching of the content within the video file to be played on the video player 105a, 105b and content of one or more advertisements selected from two or more advertisement networks 116. The contextual engine 110 communicates across a network to the two or more advertisement networks 116 that include a first advertisement server and a second advertisement server. The contextual engine 110 sends back across the network 108 to the server 104, 107 hosting the video player 105a, 105b, both identifying information on contextually matched advertisements to display with the video file as the video player 105a, 105b plays the video file on the web page 106a, 106b and temporal information when a placement of the advertisements is most contextually relevant to the content being played in the video file.

The contextual engine 110 communicates to at least one of, the web page 106a, 106b and the video player 105a, 105b hosted on the web page 106a, 106b, when a contextual event most relevant to the content of given contextually matched advertisement occurs in the playing video file so the web page 100a, 106b or video player 105a, 105b can display the contextually relevant advertisement at the best time during the playing of the video file. The contextually relevant advertisements can also be contextually targeted to play at multiple points in time within the played video. Also, the contextual engine 110 may send both 1) information regarding the temporal placement of advertisements as well as 2) positional placement of advertisements on the web page 106a, 106b, were both are relative to the video file being played by a video player 105a, 105b.

The contextual engine 110 pairs the first advertisement with the video file based on at least a best match of relevance of the first advertisement to content in the video file to be played on the web page 106a, 106b and can include other factors such as revenue received associated with playing of that advertisement. The contextual engine 110 also couples to and can incorporate a dynamic reasoning engine 131 and an engine data store 115.

A client machine 122 that has a browser application resident on the client machine 122 is configured to download the web page 106a, 106b over the network 108 into a memory of the client machine 122 from the first server 104 upon request from the browser. The client machine 122 displays the web page 106a, 106b on a display of the client machine 122 to allow a user of the client machine 122 to make a request to activate the video player 105a, 105b to play the video file.

An on-demand dynamic spider 118 has a communication link to the contextual engine 110. The contextual engine 110 upon receipt of the information about a video file about to be played, then references a ready index of already analyzed video files stored in the memory 112 of the contextual engine 110. When the file video is not present in the ready index, then the information about a video file about to be played is passed to the on-demand dynamic spider 118, where the on-demand dynamic spider 118 is configured to browse the World Wide Web upon request by the contextual engine 110 to find and bring to the contextual engine 110 the video file identified in the request.

What the contextual engine 110 does is very simple, since the contextual engine 110 has tools built in to understand every word and scene within a piece of video, the contextual engine 110 is best positioned to target advertisement content that users are interested in, at the exact moment they are watching something about same content in a video file.

For example, a video from Green TV, a channel dedicated to environmental issues, may be played by the video player. The contextual engine 110 understands that this is the perfect context to place an Ad from Shell that promotes the company's concerns for the environment.

In this example, a user has been searching for content related to 'Energy'. At the exact moment when someone talks in the video about the impact that energy savings could have on the environment, the contextual engine 110 places the ad for Shell. It is an ad that appears for 15 seconds over the content. This format is becoming increasingly popular as 'overlay'. The contextual engine 110 provides a contextually relevant advertisement of the type desired by the web page administrator and matches very precisely the content of the ad to the video file at the right moment in time.

Once the overlay appears, the user of the browser can do a number of things. In this case, by clicking on the Shell Ad, the video stops, and a new window will open with the Shell microsite 'RealEnergy.'

Thus, the contextual engine 110 communicates across a network to various generic video players 105a, including a video player supplied to a web page owner by the contextual engine system if desired, and various viral video players 105b that are coded to merely play video files specifically coded to work with only that video player type. The contextual engine 110 communicates across a network 108 to the web pages 106a, 106b hosting these video players 105a, 105b as well. The web page 106a, 106b may have an embedded advertisement player, or written in code into the scripts of the web page 106a, 106b, or the video player 105a, 105b itself to call the engine 110. The video player 105a supplied to a web page owner by the contextual engine system has the code already programmed in.

The scripts written into the web page and/or a video player embedded on the web page may also include 1) relaying identifying information regarding the video file about to be played on the video player and 2) requesting one or more advertisements to be played along with a video file played on a web page every time the video player is requested to play a video file, and 3) how, when and where to display one or more advertisements from a network of advertising databases in order to display the one or more advertisements when the video file is played and display the one or more advertisements along with a video file played on the web in one or more locations relative to a window displaying the video file.

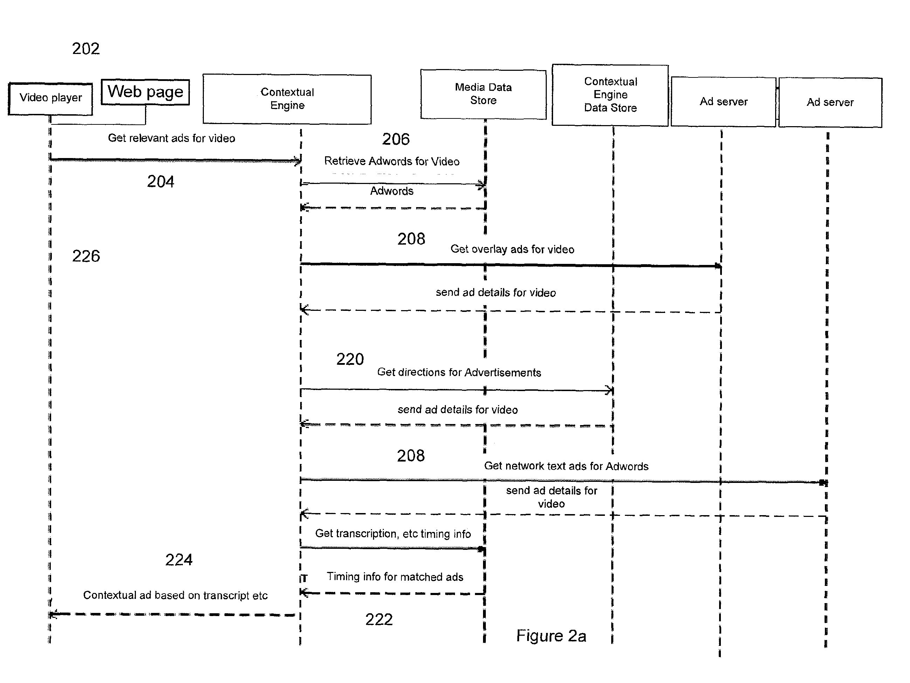

Figure 2a illustrates a flow diagram of an embodiment of the contextual engine processing a request to find one or more relevant advertisements and determine when to display each relevant advertisement at a temporally contextual point within a video file when the video file is played on a web page. The below algorithms and routines may be implemented in code scripted in a software programming language, code embedded into hardware logic circuits, and a combination of both.

In block 202, the web page or the video player detects a request to play a video file. The web page or video player also detects what video file is being requested to be played.

In block 204, the web page or the video player embedded on the web page hosted on a first server makes a real time function call across a network, such as the Internet, to the contextual engine hosted on a second server to relay identifying information regarding the video file about to be played on the video player and to request one or more advertisements to be played along with a video file played on a web page every time the video player is requested to play a video file.

In block 206, the contextual engine, upon receiving the call, looks up in an existing index for video entities whether the video's key concepts and timing information are already known. If so, the contextual engine then looks up in a media data store to obtain Adwords for the video about to be played. The Adwords are the key conceptual points found in the content of the video file about to be played. The media data store acts as a database to stores these key conceptual points about each known video file. The media data store sends these key conceptual points to the contextual engine. The contextual points may include both entities identified in the content and ideas including people, places, sports, companies, major events, and buildings. These contextual points are ordered based on their importance and the frequency these contextual points appear in the content of the video file. The Adwords contain this ranked and ordered information. The Adwords also include Metadata for the video file including potentially its description, title, inserted tags, etc. in the video file.

In block 208, the contextual engine generates a request for advertisements that contextually match the content in the key conceptual points found in the content of the video file. The contextual engine sends these key conceptual points ranked in order of importance and with assigned confidence ratings in parallel to two or more advertisement networks. For example, the contextual engine may send the Adword details to a first advertisement server in the network of advertisement servers and receive one or more video advertisements that overlay relative to the video to be played. In parallel, the contextual engine may send the Adword details across a network to a second advertisement server in the network of advertisement servers and receive one or more text advertisements that are to be positioned relative to the video to be played. Thus, the contextual engine sends the Adword to multiple advertisement network sources, which returns relevant advertisements to the contextual engine.

Alternatively, the contextual engine internally matches the video file, via a contextual record of that video file, to advertisements that the contextual engine is aware of at that time to find one or more most relevant and profitable advertisements grading out from that matching. The contextual engine may determine the contextual nature of the content in the video file as well as the contextual nature of the content of the potential advertisements from multiple advertisement sources and then contextually matches up the two. Thus, the contextual engine pairs one or more advertisements with the video file based on at least a best match of relevance of a given advertisement to content in the video file to be played on the web page.

In block 220, the contextual engine also sends identifying information about both the web page hosting the video player that is about to play the video file and the identifying information about the video file itself to the engine data store. The contextual engine then retrieves instructions/directions from the engine data store that potentially include 1) defining how various advertisements are to be positioned relative to the web page or video window, 2) the acceptable times to display the advertisements i.e. before, during, or after the playing of the video file, 3) if a certain advertisement type or a certain subject matter is banned, 4) the web page administrator's weighting preferences on revenue to contextual relevance to the content in the video, 5) how many times a contextually relevant ad should appear during a video, each time the contextual relevant point comes up or a single time, and other similar directions regarding the advertisements in relation to a played video file supplied by the web page administrator. The contextual engine presents a user interface to a web page administrator to obtain such rules and may also have these rules added in manually, or even may retrieve some of these directions from the initial request in block 204.

In block 222, the media data stores sends the timing information regarding when the key conceptual points relevant to the returned advertisements chronologically appear in the video file to the contextual engine. The media data store stores the key conceptual points about each known video file including the ranked key words, images, etc in the content and the chronological time when these key concepts occur within the known video file. The chronological time can be expressed in terms of milliseconds from the beginning of the playing of the video file, frame number, etc. The contextual engine also deciphers the revenue for displaying a given advertisement and the given advertisement's contextual relevance to the content in the video file.

In block 224, the contextually relevant advertisements to the content in the video file that match the rules and preferences set out in the engine data store are sent with the timing information on when those advertisements are relevant within the video file to the web page or video player that generated the call. The contextually relevant advertisements may be sent directly to the video player or web page by the advertisement network. The contextually relevant advertisements may be sent the video player or web page by the contextual engine. The contextual engine may deliver the combined most relevant and best revenue generating advertisements to the video player and/or web page that generated the request.

The contextual engine may customize a timing and appearance of video advertisements with contextually relevant content being played in the video file. The contextual engine sends the customization information along with the advertisements to the video player or web page that generated the request. Thus, the video player can display the one or more advertisements in close time-proximity during the playing of the video file to the timings of the extracted ideas and entities from the key contextual points identified by the content analysis tools. This allows for several different advertisements to be returned and displayed along with the video file being played as well as the display of the advertisements to be timed to coincide with the point in time within the video file when those extracted ideas and entities appear. Thus, the contextual engine supplies contextually relevant advertisements with temporal information on when the placement of advertisements is most contextually relevant to the content being played in the video file.

In block 226, the video player and/or web page receive one or more advertisements from the two or more networks of advertising databases in order to display the one or more advertisements when the video file is played. The video player or web page display the one or more advertisements along with the video file played on the web page in one or more locations relative to a window displaying the video file. The advertisements are displayed on a location in the web page relative to the video file based on a setting supplied from the web page administrator. The advertisement player displays advertisement types including text advertisements, banners, audio advertisements, image advertisements, pre-, post and mid-roll video advertisements, and other similar types of advertisements.

For example, a web page hosting a video search engine receives a contextually relevant pre-roll video advertisement and a contextually relevant banner advertisement. The way it works is simple: when someone is looking at financial update on the website, the web page presents the user with a list of the most relevant video content from a variety of professional sources. Each clip would play in the video player on the web page. Before the play list starts, the web page places a pre-roll video advertisement (usually 15 seconds) that is supported by a companion banner. The files for both advertisements and instructions on when and where to display the advertisements come from the contextual engine. The web page or video file executes the scripts to understand the how, where and when instructions on displaying the one or more contextually relevant advertisements received from the contextual engine. Once the pre-roll advertisement is finished, the play list will start and the companion banner advertisement will remain on the web page for the entire duration of the play list.

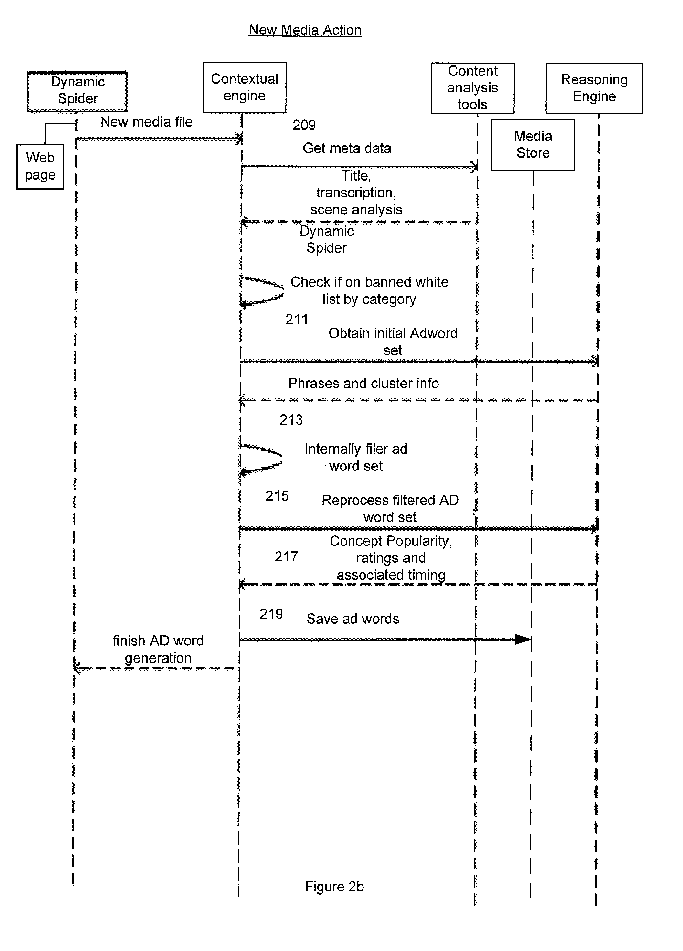

Figure 2b illustrates a flow diagram of an embodiment of the contextual engine processing a media file not previously analyzed.

In block 209, if the media file, such as a video file, audio clip, etc., is not already known, the web page or dynamic spider may retrieve or send the not already contextually analyzed media file to the contextual engine. The contextual engine then applies video analysis tools to extract key ideas, entity data, and timing information from analysis of the video file itself and Metadata associated with the video file. The content analysis tools use transcription and visual analysis services to extract conceptual points about the video file itself from the video's audio and visual tracks. The content analysis tools associated with the contextual engine may include various generic video players and various viral video players. The content analysis tools analyze a piece of video content by watching all the images, listening to all the audio, noting any information conveyed by text or symbols, and then creates key conceptual points out of all of the information that the content analysis tools extract.

The conceptual points may include both entities identified in the content and ideas including people, places, sports, companies, major events, and buildings. These conceptual points are ordered based on their importance and the frequency that these conceptual points appear with in the content of the video file. The contextual engine receives input from the set of contextual tools and compares the information from these different sources to better understand every word and scene within a piece of video to determine the most relevant conceptual points within the video and also to be able to annotate when those conceptual points occur. The engine then is in the best position to target content that users are interested in, at the exact moment they are watching it. The contextual engine also analyzes the Metadata associated with the video file and stores a summary of the key Metadata in the media store. The Metadata for the video file may include its description, title, inserted tags in the video file, etc. The contextual engine analyzes the content associated with the video file with the assistance of a dynamic reasoning engine and eventually stores a summary of the key conceptual points in the media store.

In block 211, the contextual engine sends all or a subset of the detected images, words, etc. from the content of the video file along with a confidence rating associated with each detected feature to a dynamic reasoning engine. The confidence rating indicates how confident the contextual engine is regarding the correctness of the identification of the key feature from the content of the video file. This initial set of key concepts making up the Adwords is sent to the dynamic reasoning engine. The dynamic reasoning engine returns an initial set of key conceptual points and how those key conceptual points relate and rank.

In block 213, an internal filter is applied to the initial set of key conceptual points by the contextual engine to filter out conceptual points from the initial set of key conceptual points that statistically have been found to be not particularly relevant or effective conceptual points for advertising.

In block 215, the filtered set of key conceptual points is sent back to the dynamic reasoning engine for reprocessing to determine the contextual relevance of the extracted key points and assign a new ranking to the concepts in the set of key conceptual points. Thus, the contextual engine develops an understanding of the content of the video. The contextual engine does this both based on the supplied and derived Metadata. Derived Metadata is generated by the engine's indexing process and includes building a transcription of the video and visual analysis techniques including things like scene detection etc.

In block 217, this filtered set of revised key points with rankings and rating assigned to the key points is sent from the dynamic reasoning engine to the contextual engine.

In block 219, this filtered set of revised key points with rankings and rating assigned to the key points is then saved to a memory in the media store. A notice is sent out to the dynamic spider to update the index of known video files with the identifying information of the video file just processed.

The contextual engine generically allows ads to be contextually targeted the to the video, e.g. an entertainment clip that talks about Madonna is about the singer as opposed to the religious figure.

Moreover, the contextual engine allows us to target the ad within the video understanding the video has a temporal nature e.g. to show music ads for a Madonna Concert at the exact time an entertainment clip is talking about Madonna and show other ads on high-end real estate in London at another point in that clip when Madonna goes into discussion about her home in London.

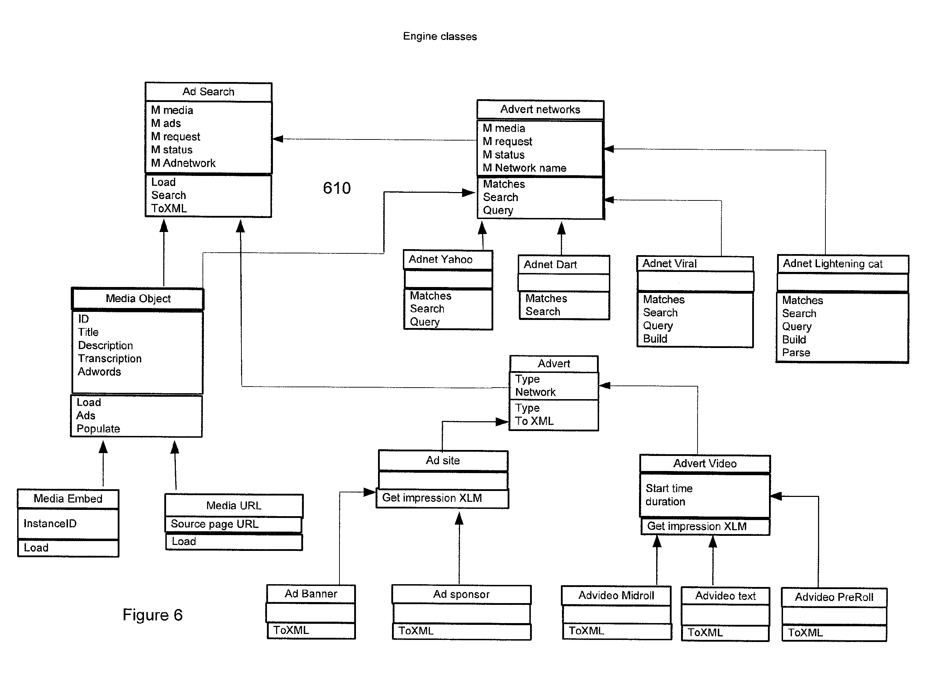

Figure 6 illustrates a class diagram of an embodiment of a contextual engine. The contextual engine 610 may include classes on the features discussed above. For example, classes may exist on the searching for and comparing of relevant advertisements to video files, the advertisement networks, advertisement types, media types, etc.

In an embodiment, the contextual engine may work with an advertisement player.

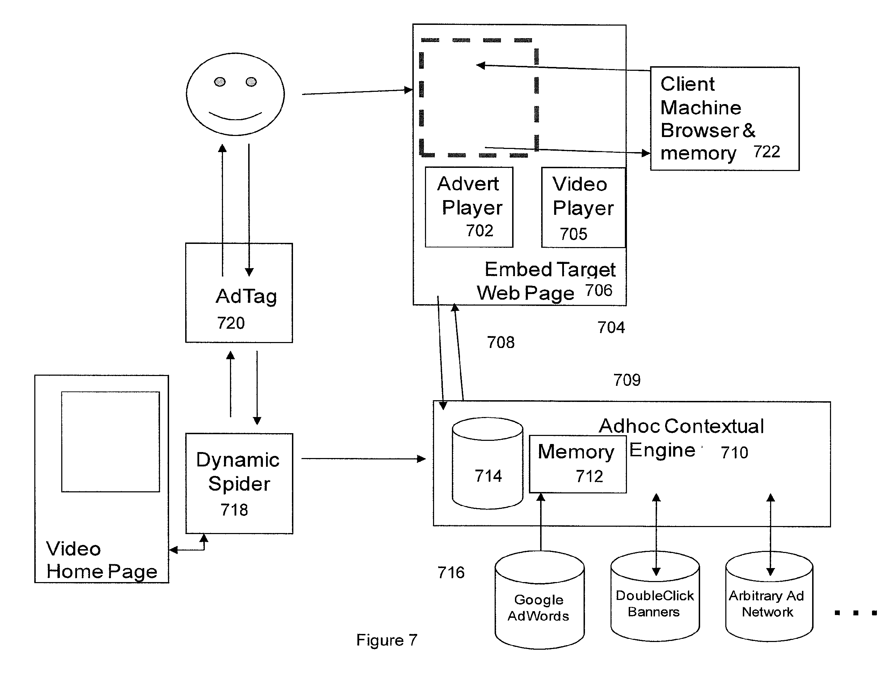

Figure 7 illustrates a diagram of an embodiment of a system to pair advertisements with video files. The advertisement player 702 such as the Advertisement embedded tag, may be configured to embed on a web page 706 having a video player 705, which is hosted on a first server 704. The first server 704 is configured to download the web page 706 over the network into a memory of a client machine 722 having a browser application resident on the client machine 722 upon request from the browser. The client machine 722 displays the web page 706 on a display of the client machine 722 to allow a user of the client machine 722 to make a request to activate the video player 705 to play the video file. The advertisement player 702 makes a call to and sends information associated with a video file about to be played on the web page 706 across a network to a contextual engine 710 hosted on a second server 709. The contextual engine 710 is configured to reference data on the video file stored in a memory 712 of the contextual engine 710 or send the video file to one or more content analysis tools to determine a content of the video file and then store the video file's content characteristics in a database 714. The content analysis tools may include a video recognition tool, a speech-to-text tool, and an optical character recognition tool that analyzes the video file itself, rather than getting a keyword summary about the video file to determine the content of the video file. The tools supply contextual characteristics about the video file to the contextual engine 710, which both makes a record of the video file in the memory 712 and its contextual characteristics as well as stores the video file's content characteristics in the database 714. The contextual engine 710 analyzes the content of the video file to be played on the video player 705 and content of two or more advertisements from two or more advertisement networks 716 and sends back across the network to the first server 704 hosting the advertisement player 702 one or more advertisements to display with the video file as the video player 705 plays the video file on the web page 706. The contextual engine 710 pairs the one or more advertisements with the video file based on at least a best match of relevance of the first advertisement to content in the video file to be played on the web page 706.

The advertisement player 702 may be a web widget or a logic circuit configured to display two or more different types of advertisements including but not limited to banner advertisements and video advertisements. The advertisement player 702 has at least the following routines configured into the advertisement player 702 by an AdTag module 720 to 1) detect when the video player 705 has been requested to play a video file and to detect what video file is being requested to be played, 2) make a call across the network to the contextual engine 710 hosted on the second server 709 to relay identifying information regarding the video file about to be played on the video player 705, and 3) receive one or more advertisements from a network of advertising databases 716 in order to display the one or more advertisements when the video file is played. The advertisement is displayed on a location in the web page 706 relative to the window displaying the video file based on a selection supplied from the web page 706 administrator. The location on the web page 706 relative to the video file played by the video player 705 can be, for example, within the window displaying the video file, overlaid on the video file, alongside the window displaying the video file, on top the window displaying the video file, below the window displaying the video file, or anywhere else the web page 706 administrator wants the advertisement shown with respect to the window playing the video file.

In an embodiment, the advertisement player 702 has code scripted in hyper text mark-up language 1) to couple with a viral video player 705 program embedded into the web page 706 as a web object, and 2) to play the advertisement with the video file being played by the video player 705 independent of the code and programming language of the code used to script either the video player 705 or the video file itself. The video player 705 and the video file as well as the video file and the first advertisement are not integrated together maximizing the amount of opportunities an advertisement can be played with one or more video files.

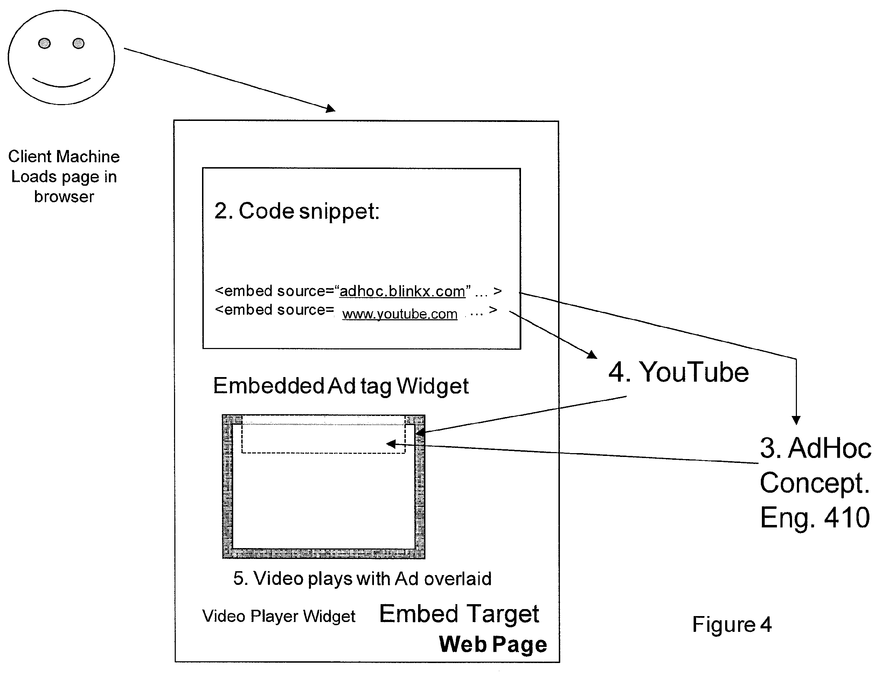

The contextual engine 710 is configured to determine one or more advisements to fetch based on 1) determining and assigning a rating how relevant in subject matter a particular advertisement is to the content in the video file and 2) how much revenue a web page 706 owner will receive for playing the particular advertisement (Advertisement yield). The contextual engine 710 has a port to receive the information sent over the network by the advertisement player 702 indicating a weight of the relevance rating in light of the revenue received factor, were the weight of the relevance rating is programmably set in a field of the advertisement player 702 by web page 706 administrator (see figure 4).

The contextual engine 710 fetches the advertisements to be displayed with the video file from any of the two or more advertisement networks 716 and requests the advertisement network storing the advertisements to send the advertisements over the network to the advertisement player 702.

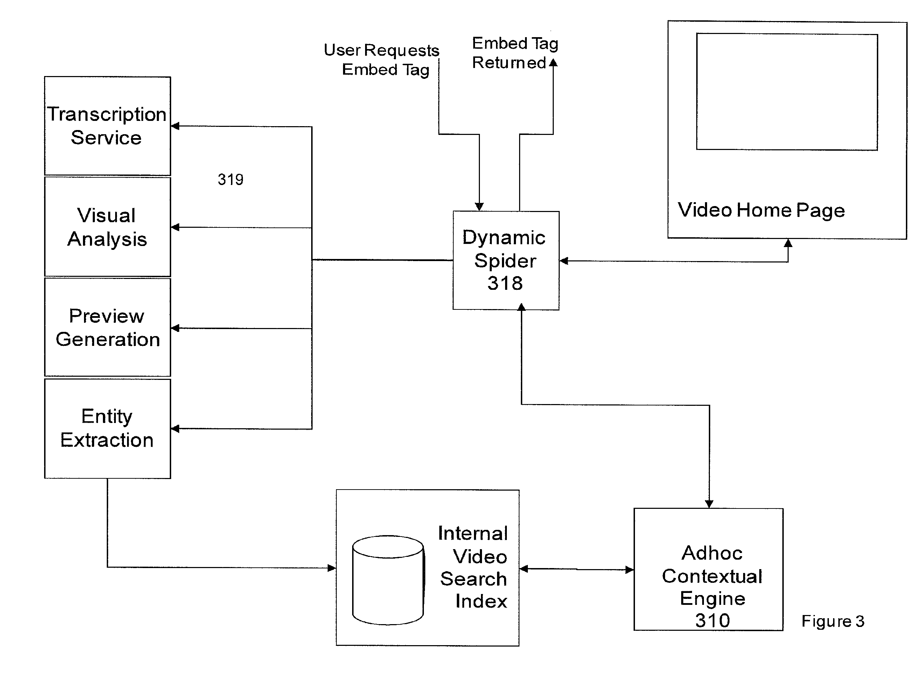

The advertisement player 702 is configured to display the one or more advertisements in close time-proximity during the playing of the video file to the timings of the extracted ideas and entities from the contextual points identified by the content analysis tools (see figure 3), allowing for several different advertisement types to be returned and displayed along with the video file. The display of the advertisements is timed to coincide with a point in time within the video file where the one or more advertisements are most relevant to the content being played at that time in the video file.

The contextual engine 710, upon receipt of the information about the video file about to be played, then references a ready index of already analyzed video files stored in the memory 712 of the contextual engine 710. When the video file is not present in the ready index, then the information about a video file about to be played is passed to an on-demand dynamic spider 718. The on-demand dynamic spider 718 is configured to browse the World Wide Web upon request by the contextual engine 710 to find and bring to the contextual engine 710 the video file identified in the request.

The on-demand dynamic spider 718 is also configured to periodically fetch and supply video files to the contextual engine 710 that the contextual engine 710 was previously unaware of. The dynamic spider 718 looks up in the ready index to check to see if the contextual engine 710 already knows of a discovered video file. When the discovered video file is not known to the contextual engine 710, then the on-demand dynamic spider 718 spiders on the fly to both get Metadata on the web page 706 and the discovered video file and sends the discovered video file to the contextual engine 710 system so that the content analysis tools can contextually determine the content of the video file. The content analysis tools can then supply contextual characteristics about the discovered video file to the contextual engine 710. The contextual engine 710 then both makes a record of the discovered video file and its contextual characteristics as well as stores the video file's content characteristics in the database 714.

The on-demand dynamic spider 718 is configured to download and parse the discovered video's home page in real time, extracting video objects and collecting associated data. The content analysis tools apply transcription services, visual analysis, preview generation, entity extraction, text recognition, and other services to extract contextual points about the content of the video file. The contextual engine 710 receives the contextual points then makes a contextual record of that discovered video file and stores the contextual record of that video file with the video's embed tag or URL as its key to this contextual record. The dynamic spider 718 or the adhoc contextual engine 710 then adds the new video file to an internal video search index.

Figure 3 illustrates a diagram of an embodiment of an on-demand dynamic spider. Referring to figure 3, initially, a user (i.e. web page publisher) provides the system to pair advertisements with video files with the embed tag or URL of the video file he or she wants advertising for. The user/publisher of the website can have found this video from any source and simply provides the system the embed tag or URL to the video that is to be paired. The system verifies if the video represented by this tag or URL is already known to the system by comparing the tag or URL to all those already known by the system and present in the system's index. If it is not known, in an embodiment, the dynamic spider 318 component is invoked once in real time at this point, as the user sets up system to pair advertisements with video files on their video.

When the video is not present in the index, the embed tag request is passed to the on-demand dynamic spider 318. The on-demand dynamic Web spider 318 is a program that browses the World Wide Web in a methodical, automated manner to provide an update on videos already analyzed by the adhoc contextual engine 310 or find source video files for the adhoc contextual engine 310 to analyze. The Web spider 318 can be also used to gather specific types of information from Web pages, such as advertising information, demographic information, information on the topic or nature of a given Web page's content and other information on the video files. Thus, the on-demand dynamic spider 318 upon request by the adhoc contextual engine 310 goes out, finds, and brings to the adhoc contextual engine 310 a video file that the adhoc contextual engine 310 was previously unaware of. The on demand spider 318 may be dormant otherwise.

After the tag is passed to the dynamic spider 318, the dynamic spider 318 looks up in a database or otherwise checks to see if the adhoc contextual engine 310 already knows of this video or otherwise sees if this video is listed in an index of videos being maintained by the adhoc contextual engine 310. The dynamic spider 318 can also determine what the video is contextually about based on unique ID code contained in the embed tag. If the video is known to the adhoc contextual engine 310, nothing further is done here. If the video is not known to the adhoc contextual engine 310, the on demand dynamic spider 318 spiders on the fly to automatically get the web page the video is based on and sends the video file to the adhoc contextual engine 310 system so that the video can be contextually processed. The dynamic spider 318 downloads and parses the video's home page in real time, extracting Video objects and collecting associated data. The adhoc contextual engine system has content analysis tools 319, which then apply transcription services, visual analysis, preview generation, entity extraction, as well as other video analysis techniques to extract the important contextual points about the content of the video file. The adhoc contextual engine system then makes a contextual record of that video and stores the contextual record of that video file with the video's embed tag or URL as its key to this contextual record. The dynamic spider 318 or the adhoc contextual engine 310 then adds the new video file to an internal video search index. The analyzed video file can also be indexed to a public video search engine 310.

After the video analysis, the dynamic spider 318 returns to the advertisement tag widget. The advertisement tag widget generates a special embed code that embodies this video and the user's ID (for accounting purposes). The embedded ad tag is returned to the user. Note, if a matching video file was found to already exist in the internal video search index, then the system generates an embed tag and returns the embed tag to the user, for inclusion in their web page.

In an embodiment, a web widget is a portable chunk of code that can be installed and executed within any separate HTML-based web page by an end user without requiring additional compilation. The web widget may be a script, module, snippet, plug-in or extension form that adds some advertisement content to that page that is not static and the content may be changed by someone other than the owner of the web page and will be run when the page is called.

Figure 4 illustrates a diagram of an embodiment of an embedded ad tag.

Referring to figures 4, the user, such as a web page publisher, now embeds the video (using the original tag provided with the additional enhancements) and also the provided embedded ad tag in a page of his choice. The embedded ad tag 402 (a.k.a. Embedded Ad Player) is a widget piece of code (written in JavaScript and Flash, but many programming languages could be used) that can be placed onto a web page near a similar piece of embedded code for a video player (such as those provided by YouTube, Google Video and other popular user-generated and professional content video sites). The code is executed on loading of the page and, at that time, sends a request to the adhoc contextual engine 410. This adhoc contextual engine 410 will return with a suggestion of one or more advertisements to display that are related to this video and the embedded ad tag 402 will display this ad. This ad can be of any form including, but not limited to, clickable text ads, display banner ads and inline video ads (whether pre, post or interstitial roll). The ads may come from databases of stored advertisements as well as external, third party advertisement networks.

A viewer of the web page loads the target web page in their browser. The viewer (consumer) opens the web page and selects to watch this video. The code in page is executed, included embedded code for player (in example, YouTube) and the code for the embedded ad tag 402.

The advertisement embed tag automatically contacts the adhoc contextual engine 410 to request relevant advertisements to this video file.

The adhoc contextual engine 410 matches the video, via the contextual record of that video, to advertisements that the adhoc contextual engine 410 is aware of right now, as well as other data the ad hoc contextual engine 410 is aware of, such as a user profile, what website or key word lead the user to that video, etc., and finds most relevant and profitable advertisement grading out from that matching. The adhoc contextual engine 410 determines the contextual nature of the content of the video as well as the contextual nature of the content of the potential advertisements from multiple advertisement sources and then contextually matches up the two. The contextual nature of the system ensures a high degree of relevance between the advertising and the content being viewed, maximizing user involvement and interactivity. The adhoc contextual engine 410 also knows the pricing associated with the determined most contextually relevant advertisements. The adhoc contextual engine 410 returns one or more of the most relevant and profitable advertisements at that time to the advertisement embed tag in the video.

The web page also may send a request for the video stream. The video stream is returned to the web page and played in the web page's video player. Thus, the viewer of that website plays the video with the video player. When the viewer hits play, the video file is activated from the source site hosting the video file and played on the website. The website owner has added the ad tag widget 402code 402 along with the code to retrieve the video file. The ad tag widget 402 may be associated with video files stored locally on that website as well. The advertisement does not have to be embedded with the video file or video player, merely the embedded advertisement tag widget is coupled with the video file and then calls for one or more of the most relevant and profitable advertisements at that time to be paired with the video file about to be played. Thus, the advertisements, whether text, banner ads or video ads are all available as potential ads to be paired with a particular video file at any given time and be played alongside or with any entities' particular video player.

The embed ad tag widget 402 plays the relevant advertisements at the same time as the video file but is not embedded into the video file. Rather, the embedded ad tag widget 402 may play the one or more advertisements: within the window displaying the video file; overlaid on the video file; alongside the window displaying the video file; on top the window displaying the video file; below the window displaying the video file; or anywhere else the user who supplied the video file wants the advertisement shown with respect to the window playing the video file.

On-line video is commonplace and growing. Much of on-line video is under-monetized or not monetized at all. In addition, much of the content is not attached to singular web pages and is, instead, available in 'embeddable' form where the online video can be plugged into any given web page (and thus delivered through a 'widget'). This system is as equally distribute-able in form as the advertising and can be used to monetize this video content in the many places, such as web sites, where the videos are found. The self-service, nature of the system and the fact that the embedded advertisement tag widget added onto the video file requires no code integration with the video file or video player and only minimal code integration (of a copy-and-paste nature) with the target web page itself, makes the embedded advertisement tag widget ideal for consumer-driven distribution, thus making it more likely to spread than heavier-weight, professional advertising solutions that typically require code-level integration with the video player itself.

Also, the in-situ operation occurs without interrupting the normal state of a system. The in-situ nature of the system, in which the advertisement tag is embedded with a video file and then calls to the website hosting the adhoc contextual engine 410 to send one or more advertisements to play in or alongside the video file, allows for distribution of pairing advertisements to video files 1) to web sites beyond the website hosting the adhoc contextual engine 410 and 2) also to any type of video content players rather than just one. In some other systems, the video player, video file and advertisement are integrated together limiting the amount of opportunities an advertisement can be played with a video because that video player must be used to play the video and advertisement. However, the design of this system lets the same advertisement be paired and played with many different videos, on many different types of viral video formats and on many different video players. Thus, the form-agnostic nature of the system maximizes the types of advertisements this system can deliver, thus increasing the options in finding relevant advertising inventory for a given piece of video content. Plus, the multiple-network approach allows the system to automatically draw advertising from more than one advertising source.

In an embodiment, consumers can assemble web pages by finding content that is offered in widget form and embed those widgets in their own web pages. This user-driven act of collation, editing and publishing may propel a user-generated content phenomenon. Video is a popular form of content that is distributed in this way, which is played on embeddable, viral video players (such as that provided by Youtube.com and others). Each viral video player is a free video sharing and video search engine 410 service that allows anyone to upload video clips to a web server as well as make their own media available free of charge. Note, some videos are also offered for sale through a Video Store. Viewers can search and play these uploaded videos directly from the Video website, as well as download video files and remotely embed them on their web pages. However, many of the viral video players are associated with a particular entity leading to many versions of viral video players being in use today. The system to pair advertisements advertisements with video files allows a way to generate revenue directly from these embedded video assets. The system to pair advertisements advertisements with video files allows any (unskilled and untrained) consumer to obtain the short embed ad tag widget 402 from the advertisement tag widget that will allow them to attach relevant (and thus highly successful) advertising to these videos and generate revenue from views of the content contained within them.

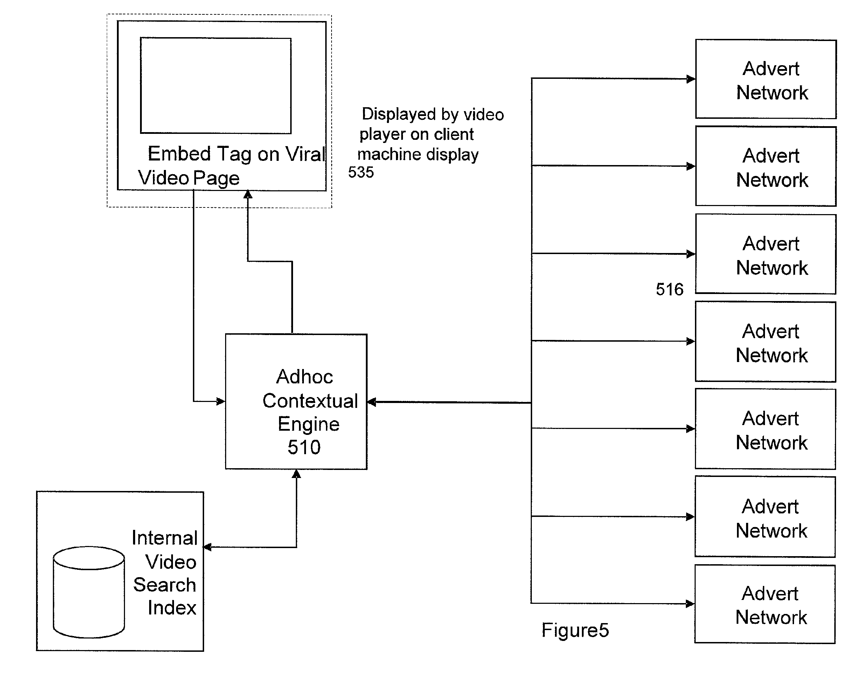

Figure 5 illustrates a diagram of an embodiment of the adhoc contextual engine pairing ads to video files. In an embodiment, the adhoc contextual engine 510 integrates with a range of advertisement networks 516 to deliver contextually relevant advertisements to be placed within arbitrary third party videos on the web. The adhoc contextual engine 510 uses the existing internal video search index and the dynamic spider when necessary to maintain full contextual knowledge of all videos with which it interfaces.

For each video a user wishes the ad hoc contextual engine 510 to deliver advertisements for, a distinct html embed tag is generated at registration time. The embed tag is inserted into the users web page.

Every time the web page containing an embed tag is viewed by an Internet user, the included embed tag generates a real time call to the adhoc contextual engine 510 to request advertisements be placed over the video. The embed ad tag widget calls the adhoc contextual engine 510 with unique video ID.

On receiving the call, the adhoc contextual engine 510 lookups in existing index for video entities, key concepts and timing information. Adhoc then extracts the key ideas and any entity from the video, this includes key ideas and entities found in the human-generated Metadata for the video (description, title, tags) plus those automatically extracted from the video's audio and visual tracks using transcription and visual analysis services. Entities and key ideas (included people, places, sports, companies, major events, buildings, objects) are ordered based on their importance and the frequency they appear, and sent in turn to the chosen advert networks, which return relevant advertisements to the adhoc contextual engine 510. The advert networks 516 are chosen based on their suitability to deliver relevant advertisements for the item in question, and any explicit user or adhoc configuration. The types of advert supported include text advertisements, banners, audio advertisements, image advertisements and pre-, post and mid-roll video advertisements. Configurable adhoc processing logic determines entities, pricing, contextual relevance, and ad network usage.

The advertisements returned by the various advert networks 516 are aggregated and ordered by the adhoc contextual engine 510, and the data is returned in real time to the calling embed tag object on the web page for advert display. If and when supported by the specific 3rd party web video playing being used, advertisements are displayed in close time-proximity to the timings of the extracted ideas and entities, allowing for several different advert areas to be returned and displayed within a video, and the display of the advertisements timed to coincide with the point within the video those entities first appear. If not supported, the ads are played at configurable or random points in time above or near the video player.

The client machine of the user having a browser application resident on the client machine downloads the web page over the network, such as the Internet, into a memory of the client machine. The client machine displays the web page on a display (535) of the client machine to allow a user of the client machine to make a request to activate the video player to play the video file.

Thus, in this embodiment, the adhoc contextual engine 510, supplies a contextually relevant video advertising platform. Just as Google's AdSense^{™} transformed advertising on the Text Web, the adhoc contextual engine 510 will revolutionize video advertising by matching compelling, customized, TV-style ads to user's audience on the Video Web.

The search technology performs two useful functions - finding content, and also matching that content to meaningful, relevant advertising. The adhoc contextual engine 510 leverages speech-to-text transcription and visual analysis technology to understand video content more thoroughly and effectively than any other service today, and can therefore dynamically place the most pertinent advertising against that video.

On-line video presents an extremely attractive opportunity for advertisers and media companies: targeted distribution with the potential for immediate action, and the availability of real-time metrics to assess the effectiveness of a given campaign.

The system to pair advertisements with video files offers content partners and advertisers a valuable proposition -- video advertising which combines the emotive power of TV promotion, with the relevance and utility of contextual search advertising. This is an exciting prospect, not only in terms of enhancing viewer experience, but also in increasing the effectiveness of campaigns.

The system to pair advertisements with video files also offers media companies and advertisers the most flexible solution for customizing the timing and appearance of video ads, with options that include pre-, post- and mid-roll placement, as well as dynamically-selected banners, in-video mini-banners and a post-roll catalog view. Partners can even select which ad databases to leverage - their own, the adhoc platform databases, or even external ad systems, such as Google's AdWords^{™}.

The system to pair advertisements with video files addresses the rich amount of media and advertising sources, resulting in higher monetization for media companies, more effective marketing for advertisers and, most importantly, a useful, non-disruptive experience for users. As video choices continue to explode, consumers desperately need tools that help them easily find what they are interested in. At the same time, marketers clamor to reach interested, though ever-fragmenting audiences with judicious and relevant ad messaging. The system to pair advertisements with video files contextual video approach deftly bridges those two forces, allowing information and advertising to flourish in a mutually beneficial way.

The system to pair advertisements with video files technologies listen to - and even see - the Web, helping users enjoy a breadth and accuracy of search results not readily available elsewhere. The system to pair advertisements with video files offers media companies and video sites a way to place targeted ads alongside (or even in) Web videos based on the specific words spoken in the videos, as well as their overall context.

The system to pair advertisements with video files addresses web video advertising, which is one of the fastest-growing segments online, with a way to make those ads as relevant as search ads.

The system to pair advertisements with video files allows web video producers as well as web page publishers to send videos to the system to be indexed so that when somebody watches that video a targeted ad can be triggered. The system to pair advertisements with video files matches ads with the videos on any given publisher's Web page through a form of contextual mapping to video. An advertiser can buy keywords, and the ads will be triggered when those words are spoken in a video or they appear in a title, description or a tag attached to the video. The ads can be delivered right back on the publisher's site selected from their own inventory, that of an ad network, or from the adhoc platform.

The ads themselves can take many forms-pre-roll, mid-roll, or post-roll video ads, as well as video "bugs" that crawl across the screen, and clickable text ads and banners that appear around the video.

Also an advertiser index may be tied to a video. The advertiser list is a clickable list that appears after the video of every product or service mentioned in the video, as determined by the adhoc contextual engine's algorithm. The advertiser list is sort of a product placement-plus. Advertisers would not even have to strike deals beforehand with whoever made the videos. They could just find all mentions of their products and advertise against them.

In one embodiment, the software used to facilitate the pair advertisements with video files described above can be embodied onto a machine-readable medium. A machine-readable medium includes any mechanism that provides (e.g., stores and/or transmits) information in a form readable by a machine (e.g., a computer). For example, a machine-readable medium includes read only memory (ROM); random access memory (RAM); magnetic disk storage media; optical storage media; flash memory devices; DVD's, electrical, optical, acoustical or other form of propagated signals (e.g., carrier waves, infrared signals, digital signals, EPROMs, EEPROMs, FLASH, magnetic or optical cards, or any type of media suitable for storing electronic instructions. The information representing the apparatuses and/or methods stored on the machine-readable medium may be used in the process of creating the apparatuses and/or methods described herein. For example, the information representing the apparatuses and/or methods may be contained in an Instance, soft instructions in an IP generator, or similar machine-readable medium storing this information.

Some portions of the detailed descriptions above are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the above discussions, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers, or other such information storage, transmission or display devices.

While some specific embodiments of the invention have been shown the invention is not to be limited to these embodiments. For example, most functions performed by electronic hardware components may be duplicated by software emulation. Thus, a software program written to accomplish those same functions may emulate the functionality of the hardware components. The hardware logic consists of electronic circuits that follow the rules of Boolean Logic, software that contain patterns of instructions, or any combination of both. The invention is to be understood as not limited by the specific embodiments described herein, but only by scope of the appended claims.

Although the above embodiments make reference to "advertisements", embodiments are not limited thereto. Embodiment can be realised in which the "advertisements" can be a form of visual data representing, for example, at least one of still image data and moving image data.

## Claims

1. An apparatus, **characterized in that:**
a contextual engine (110) hosted on a first server (109), the contextual engine (110) is configured to reference data on one or more video files stored in a memory (112) of the contextual engine (110) as well as to send each video file not previously analyzed to one or more content analysis tools (319) to determine a content within that video file and then store the video file's content characteristics in a database (114), wherein the contextual engine has a communication link to a web page (106) having a video player (105), which is hosted on a second server (104), and at least one of the web page (106) and the video player (105) is configured to make a request to and send information associated with a video file about to be played on the video player (105) across a network (108) to the contextual engine (110) for matching of a content within the video file to be played on the video player (105) and content of one or more advertisements selected from two or more advertisement networks (116), wherein the contextual engine (110) sends back across the network (108) to the second server (104) hosting the video player (105) both identifying information on one or more contextually matched advertisements to display with the video file when the video player (105) plays the video file on the web page (106) and temporal information on when a placement of the contextually matched advertisements is contextually relevant to the content being played in the video file.

2. The apparatus of claim 1, wherein upon receiving the request from the video player, the contextual engine communicates to the video player hosted on the web page when a key conceptual point most relevant to a content of a first contextually matched advertisement occurs in the playing video file so the video player can display the first contextually matched advertisement at a best time during the playing of the video file.

3. The apparatus of either of claims 1 and 2, wherein the contextual engine communicates across the network to at least one of the web page and the video player to display the first contextually relevant advertisements at multiple discrete points in time within the played video based on a preference on record made by the web page administrator.

4. The apparatus of any preceding claim, wherein the contextual engine sends a response to the request across the network to the web page on the second server that includes both 1) information regarding the temporal placement of the one or more contextually matched advertisements as well as 2) a positional placement of the advertisements on the web page, were both are relative to the video file being played by the video player.

5. The apparatus of any preceding claim, further comprising:
a client machine having a browser application resident on the client machine configured to download the web page over the network into a memory of the client machine from the second server upon request from the browser and the client machine displays the web page on a display of the client machine to allow a user of the client machine to make a request to activate the video player to play the video file; and
an on-demand dynamic spider having a communication link to the contextual engine, wherein the contextual engine upon receipt of the information about the video file about to be played, then references a ready index of already analyzed video files stored in the memory of the contextual engine and when the file video is not present in the ready index, then the information about the video file about to be played is passed to the on-demand dynamic spider, where the on-demand dynamic spider is configured to browse the World Wide Web upon request by the contextual engine to find and bring to the contextual engine the video file identified in the request.

6. The apparatus of any preceding claim, wherein the contextual engine has an output module configured to communicate across the network to as well as an input module configured to receive the request from both a generic video player embedded on the web page hosted on the second server and to a viral video player that is coded to merely play video files specifically coded to work with only that video player type, which is embedded on another web page hosted on a third server.

7. The apparatus of any preceding claim, wherein the content analysis tools are configured to use at least transcription and visual analysis services to extract key conceptual points about the video file itself from the video file's audio and visual tracks, and the extracted key conceptual points are stored in a database and retrieved by the contextual engine from the database.

8. A method, **characterized in that:**
processing a request to find one or more relevant advertisements and determine when to display each relevant advertisement at a temporally contextual point within a video file when the video file is played on a web page;
receiving identifying information regarding the video file about to be played on the video player across a network from either a web page or a video player embedded on the web page and the request to find the one or more relevant advertisements;
upon receiving the request, looking up in an existing index for video entities whether key conceptual points of the video file and their timing information are already known;
retrieving the video file's key concepts and timing information from a database;
generating a request for advertisements that contextually match the content in the key conceptual points found in the content of the video file;
retrieving the timing information regarding when the key conceptual points that are relevant to returned advertisements chronologically appear in the video file; and
supplying one or more contextually matched advertisements with the timing information on when a placement of the contextually matched advertisements is most contextually relevant to the content being played in the video file.

9. The method of claim 8, wherein the key conceptual points are ordered based on their importance and a frequency these contextual points appear in the content of the video file and the key conceptual points include content that appears in the video file, content spoken in the video file, symbols and text appearing in the video file, and Metadata associated with the video file.

10. The method of either of claims 8 and 9, further comprising:
generating the request for advertisements that contextually match the content in the key conceptual points found in the content of the video file in parallel to two or more advertisement networks; and
receiving one or more advertisements from the two or more networks of advertising databases in order to display the one or more advertisements when the video file is played, wherein the video player or web page display the one or more advertisements along with the video file played on the web page in one or more locations relative to a window displaying the video file.

11. The method of any of claims 8 to 10, further comprising:
retrieving instructions that include 1) defining how various advertisements are to be positioned relative to the web page or window for the video player, 2) acceptable times to display the advertisements, before, during, or after, the playing of the video file, 3) if a certain advertisement type or a certain subject matter is banned, 4) the web page administrator's weighting preferences on revenue to contextual relevance to the content in the video file, and 5) how many times a particular contextually matched advertisement should appear during a playing of the video file, wherein the contextually matched advertisements to the content in the video file and that match the instructions are sent in a response with the timing information on when those advertisements are relevant within the video file to the web page or the video player that generated the request.

12. The method of any of claims 8 to 11, further comprising:
deciphering a revenue generated for displaying a given advertisement and the given advertisement's contextual relevance to the content in the video file; and
delivering a combined most relevant and best revenue generating advertisements to the video player or the web page that generated the request.

13. The method of any of claims 8 to 12, further comprising:
customize a timing and an appearance of a video advertisement with contextually relevant content being played in the video file, wherein the contextual engine sends the customization information along with the advertisements to the video player or the web page that generated the request.

14. The method of claim 13, further comprising:
using transcription and visual analysis services to extract conceptual points about the video file itself from the video file's audio and visual tracks and then creating a set of key conceptual points out of the information extracted.

15. The method of claim 14, wherein the conceptual points are ordered based on their importance and a frequency these conceptual points appear in the content of the video file and comparing the extracted information from two different sources to better understand the content within the video file and also to be able to annotate when the key conceptual points occur.

16. The method of any of claims 8 to 15, further comprising:
sending at least detected images and words from the content of the video file along with a confidence rating associated with each detected feature to a dynamic reasoning engine.

17. The method of any of claims 8 to 16, wherein an internal filter is applied to an initial set of key conceptual points by a contextual engine to filter out conceptual points from the initial set of key conceptual points that statistically have been found to be not particularly relevant or effective conceptual points for advertising.

18. A system, **characterized in that:**
a contextual engine (110) hosted on a first server (109), the contextual engine (110) is configured to reference data on one or more video files stored in a memory (112) of the contextual engine (110) as well as to send each video file not previously analyzed to one or more content analysis tools (319) to determine a content within that video file and then store the video file's content characteristics in a database (114), wherein the contextual engine has a communication link to a web page (106) having a video player (105) that is hosted on a second server (104), and at least one of the web page (106) and the video player (105) is configured to make a request to and send information associated with a video file about to be played on the video player (105) across a network (108) to the contextual engine (110) for matching of a content within the video file to be played on the video player (105) and content of one or more advertisements selected from two or more advertisement networks (116), wherein the contextual engine (110) sends back across the network (108) to the second server (104) hosting the video player (105) and web page (106) both identifying information on one or more contextually matched advertisements to display with the video file when the video player (105) plays the video file on the web page (106) and temporal information on when a placement of the contextually matched advertisements is contextually relevant to the content being played in the video file;;
a client machine (122) having a browser application resident on the client machine (122) configured to download the web page (106) over the network (108) into a memory of the client machine (122) from the second server (104) upon request from the browser and the client machine 122 displays the web page (106) on a display (535) of the client machine (122) to allow a user of the client machine (122) to make a request to activate the video player (105) to play the video file; and
an on-demand dynamic spider (118) having a communication link to the contextual engine (110), wherein the contextual engine (110) upon receipt of the information about the video file about to be played, then references a ready index of already analyzed video files stored in the memory (112) of the contextual engine (110) and when the file video is not present in the ready index, then the information about the video file about to be played is passed to the on-demand dynamic spider (118), where the on-demand dynamic spider (118) is configured to browse the World Wide Web upon request by the contextual engine (110) to find and bring to the contextual engine (110) the video file identified in the request.

19. The system of claim 18, further comprising:
an advertisement player configured to embed on the web page having the video player, which is hosted on the second server, the advertisement player is configured to make a call to and send information associated with the video file about to be played on the web page across the network to the contextual engine hosted on the first server and is configured to display two or more different types of advertisements, wherein the contextual engine sends a response to the request across the network to the web page on the second server that includes both 1) information regarding the temporal placement of the one or more contextually matched advertisements as well as 2) a positional placement of the advertisements on the web page, and
wherein the contextual engine communicates to the video player hosted on the web page when a key conceptual point most relevant to a content of a first contextually matched advertisement occurs in the playing video file so the video player can display the contextually relevant advertisement at a best time during the playing of the video file.

20. The system of either of claims 18 and 19, wherein the contextual engine has an output module configured to communicate across the network to as well as an input module configured to receive the request from both to a generic video player embedded on the web page hosted on the second server and to a viral video player that is coded to merely play video files specifically coded to work with only that video player type, which is embedded on another web page hosted on a third server, and
wherein the content analysis tools are configured to use at least transcription and visual analysis services to extract key conceptual points about the video file itself from the video file's audio and visual tracks, and the extracted key conceptual points are stored in a database and retrieved by the contextual engine from the database.
